# EUROPEAN PATENT APPLICATION

(11) **EP 1 164 470 A1**
(43) Date of publication of application: **19.12.2001**
(21) Application number: 00969884.6
(22) Date of filing: 19.10.2000
(51) Int. Cl.: G06F 9/06, G06F 9/445, G06F 13/00, G06F 13/10

(54) **METHOD OF UPDATING PROGRAM AND COMMUNICATION TERMINAL**

(30) Priority: 21.10.1999 JP 29905299
(71) Applicant: MATSUSHITA ELECTRIC INDUSTRIAL CO., LTD., Kadoma-shi, Osaka 571-8501 (JP)
(72) Inventor: SAITO, Hiroyuki, Yokohama-shi, Kanagawa 236-0023 (JP)
(74) Representative: Grünecker, Kinkeldey, Stockmair & Schwanhäusser Anwaltssozietät
(86) International application number: JP0007264
(87) International publication number: WO0129657

(57) **Abstract**

A communication terminal apparatus 101 and a communication terminal apparatus 102, having the same configuration, are connected to each other, and one is used as a program transmitting-side terminal and the other is used as a program receiving-side apparatus to update a program.

## Description

### Technical Field

The present invention relates to a program updating method and a communication terminal apparatus.

### Background Art

In electronic equipment such as a communication terminal apparatus, having flash ROM that stores a program mounted on a circuit board, one or a plurality of communication terminal apparatuses is connected to a personal computer apparatus or a general-purpose computer apparatus (hereinafter generally referred to as "computer apparatus"), which is required to update a program, and the updating of program is generally performed under control of the computer apparatus in a state that flash ROM is mounted on the circuit board.

In this case, the computer apparatus transfers program data stored in the computer apparatus to the communication terminal apparatus via a serial signal terminal, and writes the program into flash ROM of the communication terminal apparatus.

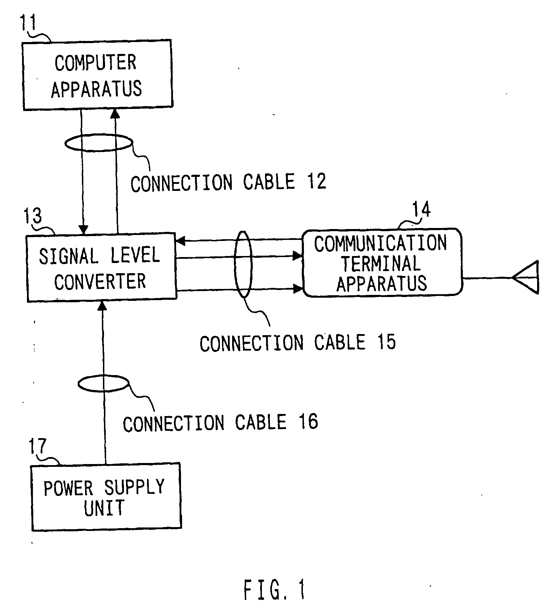

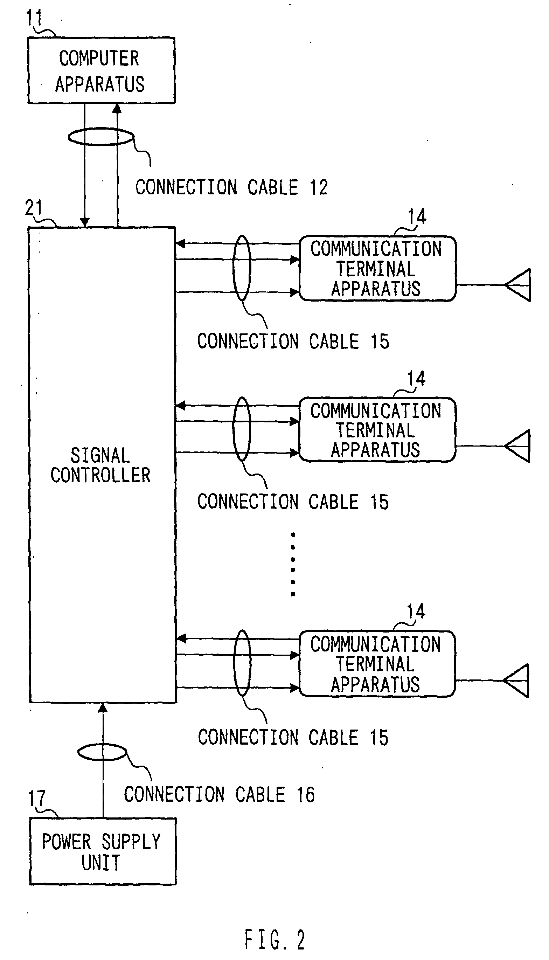

With reference to FIGS. 1 and 2, an explanation will be given of the configuration of the apparatus when the computer apparatus and the communication terminal apparatus are connected to each other to transfer the program to the communication terminal.

First, the following will explain the case of transferring the program to one communication terminal apparatus. FIG. 1 is a block diagram illustrating the configuration of a conventional apparatus for transferring the program to one communication terminal apparatus.

In FIG. 1, a computer apparatus 11 serially transfers a program to a signal level converter 13 via a connection cable 12. The signal level converter 13 converts the voltage level of serial signals between the computer apparatus 11 and a communication terminal apparatus 14, and transfers the program transferred from the computer apparatus 11 to the communication terminal apparatus 14 connected via the connection cable 15. The signal level converter 13 supplies power sent from a power supply unit 17 via a connection cable 16 to the communication terminal apparatus 14 via the connection cable 15.

When the communication terminal apparatus 14 receives all program data transferred from the computer apparatus 11 and finishes writing the programs, the communication terminal apparatus 14 confirms that there is no error in the written contents by a checksum calculation, and sends the confirmation result to the computer apparatus 11 via the connection cable 15 and the connection cable 12. Whereby, the program transfer from the computer apparatus 11 is stopped.

An explanation will be next given of the case of transferring the program to the plurality of communication terminal apparatus concurrently. FIG. 2 is a block diagram illustrating the configuration of a conventional apparatus for transferring the program to a plurality of communication terminal apparatuses concurrently. In addition, some portions corresponding to those of FIG. 1 are assigned the same symbols as those of corresponding portions illustrated in FIG. 1 and its explanation is omitted.

In FIG. 2, a signal controller 21 performs conversion of a serial signal voltage level between the computer apparatus 11 and the plurality of communication terminal apparatuses 14, and transfers the program transferred to the plurality of communication terminal apparatuses 14 concurrently. The signal controller 21 supplies power to the plurality of communication terminal apparatuses 14 concurrently.

According to the program transferring method in FIG. 2, an increase in the number of connection cables 15 in parallel makes it possible to increase the number of communication terminal apparatuses 14 which can be written the program concurrently. Further, when it is necessary to update the program with respect to a large number of communication terminal apparatuses 14 at one time, a large number of apparatus configurations illustrated in FIG. 2 may be used.

However, in the conventional program updating method, there are problems set forth below.

More specifically, the efficiency of program writing processing depends on the number of installable computer apparatuses and the number of signal level converters or signal controllers. However, since these apparatus configurations result in the large scale and take up large amounts of the footprint, the footprint is limited. Accordingly, there is a limitation in improvement of the efficiency of processing by increasing the number of these apparatuses.

Moreover, time required for writing the program to one communication terminal apparatus depends on the performance of the computer apparatus and the transmission rate of serial signal standardized for the computer apparatus, there is a limitation in improvement of the efficiency of processing. In other words, the transmission rate of the serial signal is limited by the constraints of the computer apparatus to which the communication terminal apparatus is connected, thereby making it more difficult to improve the efficiency of processing as the number of alternatives of transmission rates is small.

Still moreover, even in the case of improving the efficiency of processing about the program writing by the method for writing the program to the plurality of communication terminal apparatuses concurrently, the connections of these communication terminal apparatuses must be made at one time in order to start the writing simultaneously. Since time other than the writing time, for example, preparation time that elapses before the writing is started and detaching time after writing are required, large improvement in the efficiency of processing is not expected. Further, since writing time must be kept pace with writing process to a plurality of communication terminal apparatuses, waiting time for writing processing occurs and processing efficiency is reduced.

Still moreover, it takes much time and cost to develop the signal level converter and the signal controller.

### Disclosure of Invention

It is an object of the present invention is to provide a program updating method that is capable of rapidly improving efficiency of program updating processing and manufacturing a large amount of program updating apparatuses at low cost, and provide a communication terminal apparatus.

In order to attain the above object, according to the present invention, the communication terminal apparatuses, having the same configuration, are connected to each other, and one is used as a program transmitting-side terminal and the other is used as a program receiving-side terminal to update a program.

### Brief Description of Drawings

FIG. 1 is a block diagram illustrating the configuration of a conventional apparatus to transfer a program to one communication terminal apparatus;
FIG. 2 is a block diagram illustrating the configuration of a conventional apparatus to transfer a program to a plurality of communication terminal apparatuses;
FIG. 3 is a block diagram illustrating the connection state of the communication terminal apparatuses according to a first embodiment of the present invention;
FIG. 4 is a block diagram of main parts illustrating the general configuration of communication terminal apparatuses according to the first embodiment of the present invention;
FIG. 5 is a block diagram of main parts illustrating the general configuration of a program transmitting apparatus in the communication terminal apparatus according to the first embodiment of the present invention;
FIG. 6 is a block diagram of main parts illustrating the general configuration of a program receiving apparatus in the communication terminal apparatus according to the first embodiment of the present invention;
FIG. 7 is a flowchart explaining the operations of the communication terminal apparatuses according to the first embodiment of the present invention;
FIG. 8 is a flowchart explaining the operations of the communication terminal apparatuses according to the first embodiment of the present invention; and
FIG. 9 is a flowchart explaining the operations of the communication terminal apparatuses according to the second embodiment of the present invention.

### Best Mode for carrying Out the Invention

Embodiments of the present invention will be specifically described with reference to drawings accompanying herewith.

### (First embodiment)

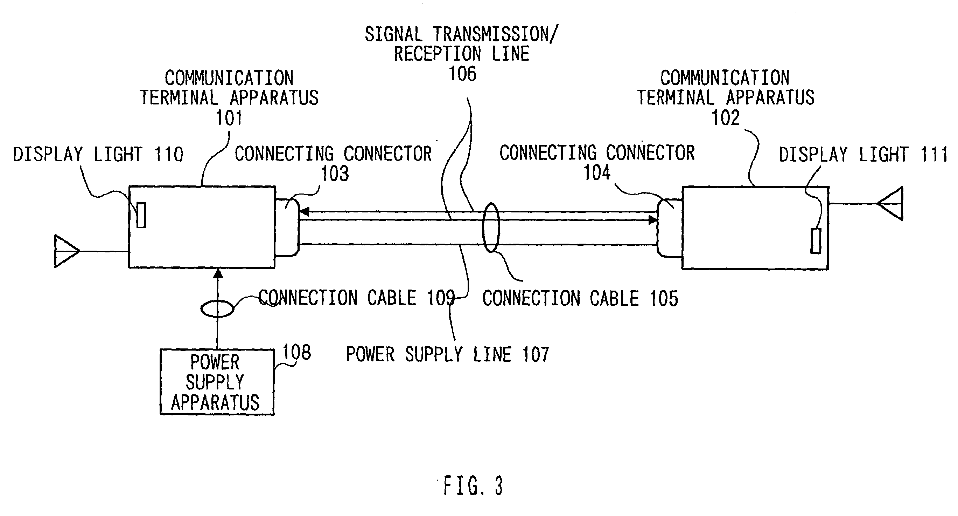

FIG. 3 is a block diagram illustrating a connection state of the communication terminal apparatuses according to a first embodiment of the present invention. Two communication terminal apparatuses 101 and 102, having the same configuration, are connected to each other using a connecting connector 103 and a connecting connector 104 via a connection cable 105. The connection cable 105 is composed of a signal transmission/reception line 106 and a power supply line 107. The explanation set forth below will be given on assumption that the communication terminal apparatus 101 is used as program transmitting-side terminal and the communication terminal apparatus 102 is used as a program receiving-side terminal.

The communication terminal apparatus 101 is connected to a power supply apparatus 108 via a connection cable 109. At the time of a program updating time, the communication terminal apparatus 101 and the communication terminal apparatus 102 are driven by power supplied from the power supply apparatus 108. A display light 110 and a display light 111 are used to display the result of the update.

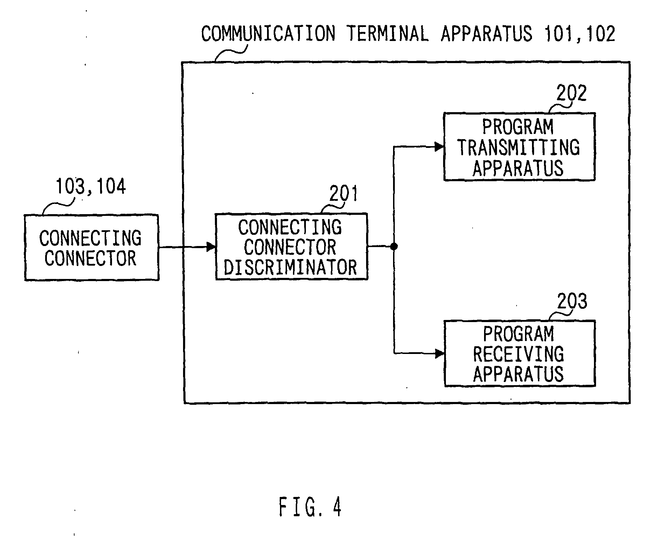

An explanation of the configurations of the communication terminal apparatus 101 and the communication terminal apparatus 102 will be next given. FIG. 4 is a block diagram of main parts illustrating the general configuration of communication terminal apparatuses according to the first embodiment of the present invention. In addition, some portions corresponding to those of FIG. 3 are assigned the same symbols as those of corresponding portions illustrated in FIG. 3 and its explanation is omitted.

The communication terminal apparatus 101 and the communication terminal apparatus 102 are apparatuses having the same configuration, and each comprises a connecting connector discriminator 201, a program transmitting apparatus 202, and a program receiving apparatus 203. The connecting connector discriminator 201 discriminates the kinds of the connecting connector 103 and the connecting connector 104, and determines whether the communication terminal apparatus is used as a program transmitting-side terminal or a program receiving-side terminal. Namely, the connecting connector discriminator 201 starts either the program transmitting apparatus 202 or the program receiving apparatus 203 depending on the kind of the connecting connector connected to the communication terminal apparatus.

The program transmitting apparatus 202 transmits a program used update, that is, an updating program to the program receiving-side terminal (herein, communication terminal apparatus 102). The program receiving apparatus 203 receives an updating program from the program transmitting-side terminal (herein, communication terminal apparatus 101), and updates a program.

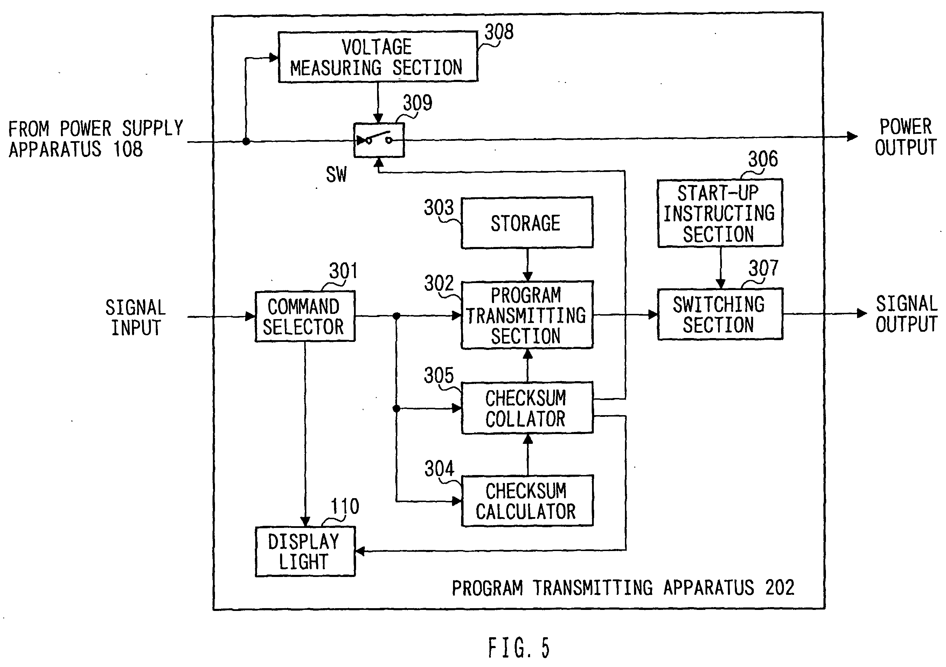

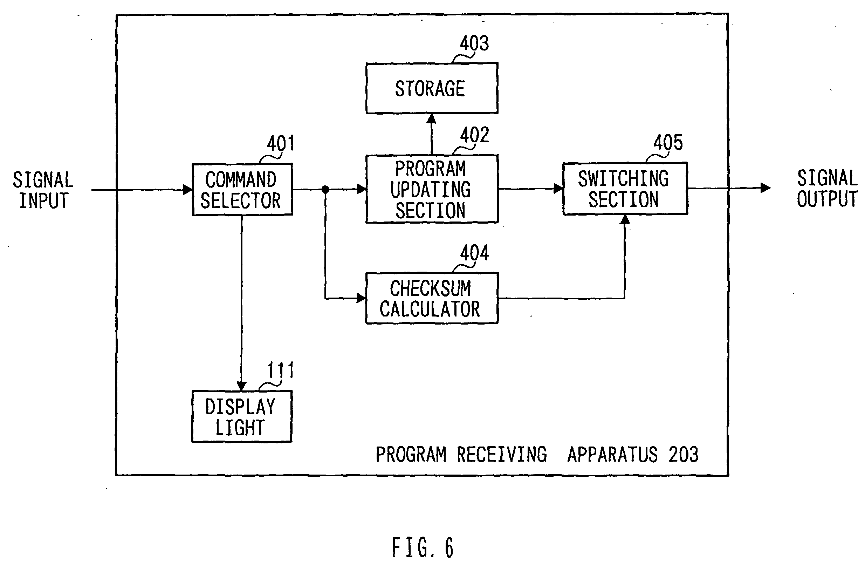

An explanation of the configurations of the program transmitting apparatus 202 and the program receiving apparatus 203 will be next given. FIG. 5 is a block diagram of main parts illustrating the general configuration of the program transmitting apparatus in the communication terminal apparatus according to the first embodiment of the present invention. FIG. 6 is a block diagram of main parts illustrating the general configuration of the program receiving apparatus in the communication terminal apparatus according to the first embodiment of the present invention. In addition, some portions corresponding to those of FIG. 3 are assigned the same symbols as those of corresponding portions illustrated in FIG. 3 and its explanation is omitted.

In the program transmitting apparatus 202 illustrated in FIG. 5, a command selector 301 judges a command indicated by an inputted signal. A program transmitting section 302 reads an updating program stored in storage 303 and transmits the updating program. The storage 303 is composed of, e.g., flash ROM, etc. and stores the updating program and various kinds of programs for operating the communication terminal apparatuses.

A checksum calculator 304 calculates the so-called checksum, which is used to determine whether or not the update of the program is correctly performed. A checksum collator 305 performs collation between a checksum calculated at the program transmitting apparatus-side terminal and a checksum calculated at the program receiving-side terminal.

A start-up instructing section 306 outputs a signal for starting up the communication terminal apparatus 102 as a program receiving-side terminal. A switching section 307 switches a signal to be outputted. A voltage measuring section 308 measures a voltage of power supplied from the power supply apparatus 108 and controls connection/disconnection of a switch 309 in accordance with the voltage.

While, in the program receiving apparatus 203 illustrated in FIG. 6, a command selector 401 judges a command indicated by an inputted signal. A program updating section 402 writes a received updating program to storage 403. The storage 403 is composed of, e.g., flash ROM, etc. and stores various kinds of programs for operating the communication terminal apparatuses.

A checksum calculator 404 calculates the so-called checksum, which is used to determine whether or not the update of the program is correctly performed. A switching section 405 switches a signal to be outputted.

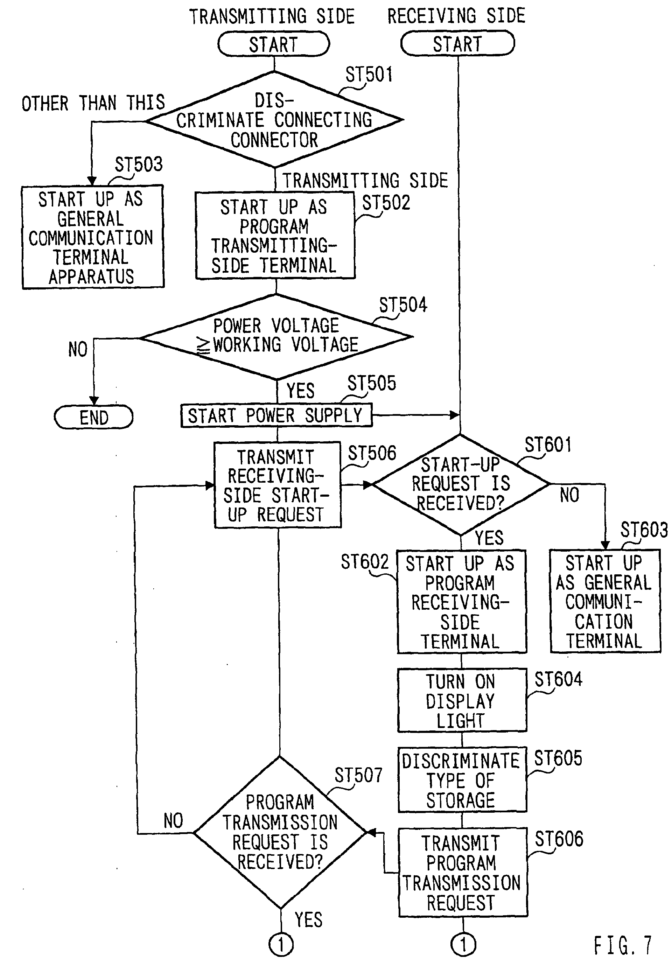

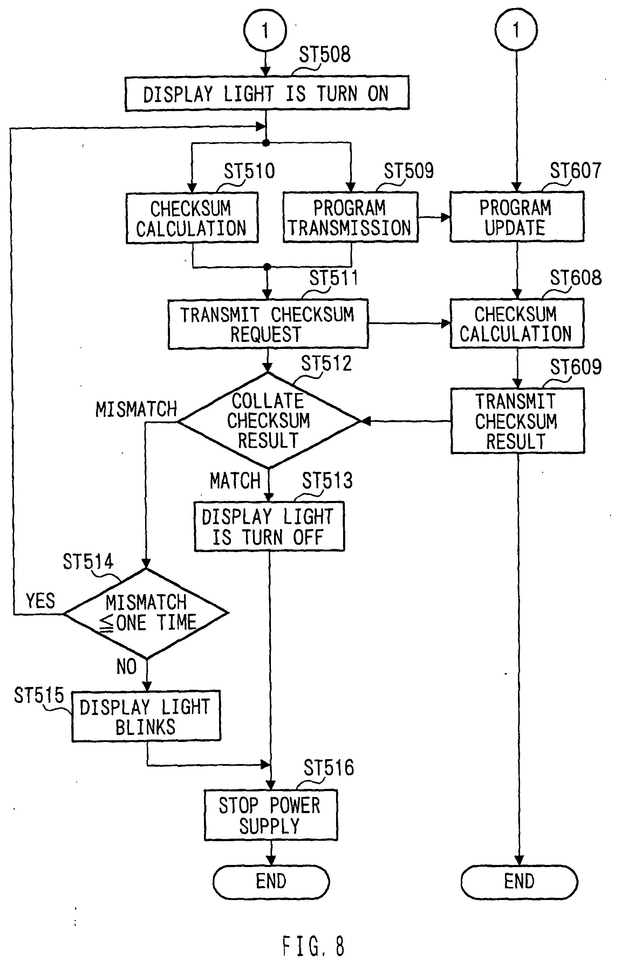

An explanation will be given of the operations of the communication terminal apparatuses having the aforementioned configuration. FIG. 7 and FIG. 8 are flowcharts for explaining the operations of the communication terminal apparatuses according to the first embodiment of the present invention.

First, in step (hereinafter referred to as "ST") 501, in the communication terminal apparatus 101, the connecting connector discriminator 201 discriminates the kind of the connecting connector 103. Then, in the case where the kind of the connecting connector 103 is a dedicated connector to be connected to the program transmitting-side terminal (hereinafter referred to as "transmission dedicated connector"), the connecting connector discriminator 201 starts up the program transmitting apparatus 202 in ST502. While, in the case where the kind of the connecting connector 103 is a connector other than transmission dedicated connector or one that is not connected, the communication terminal apparatus 101 is started up as a general communication terminal apparatus that performs communications in ST503. This makes it possible for the communication terminal apparatus to be automatically started up as a program transmitting-side terminal based on only the discrimination of the kind of the connector.

Next, in ST504, the voltage measuring section 308 measures a voltage of power supplied from the power supply apparatus 108. Then, in the case where the power supply voltage is more than a predetermined working voltage necessary to operate the program transmitting apparatus 202 and the program receiving apparatus 203, the voltage measuring section 308 turns on the switch 309. Whereby, in ST505, power is also supplied to the program receiving-side terminal from the power supply apparatus 108 via the program transmitting-side terminal. While, in the case where the power supply voltage is smaller than the predetermined working voltage, program update processing is ended.

This makes it possible for the one communication terminal apparatus to use the other communication terminal apparatus as a power supply source. Further, in the case where the power supply voltage is smaller than the predetermined working voltage, no program update processing is performed, thereby making it possible to prevent data brakeage due to the failure in updating the program caused by the shortage of working voltage.

Additionally, processing in ST504 may be configured to be carried out by not the program transmitting-side terminal but the program receiving-side terminal. Even in the case of such a configuration, the program update processing is not performed when the power supply voltage is smaller than the predetermined working voltage. Hence, it is possible to prevent data brakeage due to the failure in updating the program caused by the shortage of working voltage.

Moreover, processing in ST504 may be configured to be carried out at the preliminary step of the processing in ST502. In this case, when the power supply voltage is smaller than the predetermined working voltage in ST504, the program update processing may be ended. Also, the communication terminal apparatus may be started up as a general communication terminal apparatus that performs communications.

Sequentially, in ST506, the start-up instructing section 306 outputs a start-up request signal to the program receiving-side terminal. At this time, the switching section 307 is in a state that connects the start-up instructing section 306 to the signal transmission/reception line 106.

After that, when a command selector 401 of the communication terminal apparatus 102, serving as the communication receiving-side terminal, receives the start-up request signal in ST601, the command selector 401 starts up the program receiving apparatus 203, and turns on the display light 111 with a given color indicative of the program receiving-side terminal in ST602. This makes it possible to easily discriminate between the program transmitting-side terminal and the program receiving-side terminal. Then, the reception of start-up request signal is notified the program updating section 402.

On the other hand, when the start-up request signal is not received or the connector itself is not connected, the communication terminal apparatus 102 starts up as a general communication terminal that performs communications in ST603.

After that, in ST605, the program updating section 402 determines the type of storage 403 composed of flash ROM, and the like.

After determining the type of storage 403, in ST606, the program updating section 402 outputs a program transmission request signal to the program transmitting-side terminal. At this time, the switching section 405 is in a state that connects the program updating section 402 to the signal transmission/reception line 106. Herein, a rate of signal for transmitting the program, vacant time between signals to be transmitted, a parameter indicative of address information of storage 403 and the like are added to the transmission request signal. Hence, even in program update processing that is carried out by both communication terminal apparatuses, a change in parameter information makes it possible to change a transmission rate or a program-writing portion easily depending on the purpose of use. In addition, the transmission of parameter may be carried out from the program transmitting-side terminal to the program receiving-side terminal. In this case, the transmission of parameter is performed at any time after the processing in ST507 and before the processing in ST509, or in accordance with the transmission of program in ST509.

Sequentially, in ST507, when the command selector 301 of the program transmitting apparatus 202 receives the program transmission request signal, the command selector 301 turns on the display light 110 with a given color indicative of the start of the program transmission. On the other hand, while the command selector 301 does not receive the transmission request signal, processing in ST506 to S507 is repeated.

Then, in ST509, the command selector 301 instructs the program transmitting section 302 to transmit the updating programs. The program transmitting section 302 reads the updating programs from the storage 303 and transmits them to the program receiving-side terminal sequentially in accordance with this instruction in step ST509. At this time, the switching section 307 is in a state that connects the program transmitting section 302 to the signal transmission/reception line 106.

Moreover, in ST510, the command selector 301 instructs the checksum calculator 304 to start the checksum calculation. In accordance with this instruction, the checksum calculator 304 performs the checksum calculation concurrently with the transmission of updating programs.

After that, in ST607, the program updating section 402 of the program receiving-side terminal writes the received updating program to the storage 403 in accordance with the type determined in ST605. In addition, before writing, the program updating section 402 erases the updated program stored in the storage 403 in advance. Thus, the writing of program is performed in accordance with each type at the program receiving-side terminal. Hence, even the case where the program receiving-side terminals have different types of flash ROM mounted thereon, respectively, it is enough that the program transmitting-side terminal may transmit the program to all program receiving-side terminals with the same operation.

After that, when the transmission of the updating programs is all finished, the program transmitting section 302 of the programtransmitting-sideterminal transmits a checksum request signal to the program receiving-side terminal in ST511. Then, in ST608, the command selector 401 of the program receiving-side terminal, which has received the checksum request signal, instructs the checksum calculator 404 to perform the checksum calculation. As a result, the checksum calculator 404 performs the checksum calculation.

When the checksum calculator 404 finishes the checksum calculation, the checksum calculator 404 transmits the result to the program transmitting-side terminal in ST609. At this time, the switching section 405 is in a state that connects the checksum calculator 404 to the signal transmission/reception line 106.

Sequentially, the command selector 301 of the program transmitting-side terminal, which has received the checksum calculation result, instructs the checksum collator 305 to perform collation of the checksum calculation result in ST512. As a result, the checksum collator 305 performs collation between the checksum calculation result calculated by the checksum calculator 304 and the received checksum calculation result.

As a result of the collation, when a match occurs , the checksum collator 305 turns off the display light 110 and notifies the user of the communication terminal apparatus of the point that the update of the program has succeeded in ST513. Then, in ST516, the checksum collator 305 turns off the switch 309. As a result, power supply to the program receiving-side terminal is stopped and the program update processing is ended.

Additionally, in ST513, the checksum collator 305 may be configured in such a way to output the signal, which indicates that the update of the program has succeeded, to the outer unit connected to the communication terminal apparatus. This makes it possible to make a judgment about the performance of the program update processing by the computer and the like connected to the outer unit of the communication terminal apparatus. Further, at the time of performing the update of program to the large amount of communication terminal apparatuses, it is possible to perform the management of processing by the computer and the like connected to the outer unit. This also makes it possible to make a judgment about the success or failure of the update of program using the collation of the checksum calculation result by not the program transmitting-side terminal but the program receiving-side terminal.

As a result of the collation in ST512, when a mismatch occurs, namely, the update of program fails, the checksum collator 305 checks the number of past mismatches (the number of failure), which has been accumulated since the start of transmitting the updating program in ST514. Then, in the case where the failure of the program update processing this time is the first failure, the checksum collator 305 sends a retransmission request of the update program to the program transmitting section 302. Thus, processing in ST509 to ST512 is performed again, and the updating program is retransmitted to the program receiving-side terminal. For this reason, since the retransmission of the update program is automatically performed when the update processing fails, it is possible to increase the percentage of the success of update processing.

While, in the case where the number of mismatches (the number of failure) reaches a predetermined number (herein, two) in ST514, the checksum collator 305 blinks the display light 110 with a given color indicative of the failure in updating the program in ST515. This makes it possible to easily confirm whether or not the update of program has succeeded.

Then, in ST516, the checksum collator 305 turns off the switch 309. As a result, power supply to the program receiving-side terminal is stopped, and the program update processing is ended. Though the above has explained the configuration in which the program update processing is ended when the number of mismatches (the number of failure) reaches two, the predetermined number is changed to make it possible to set the number of retransmissions of the updating program appropriately.

Thus, according to the first embodiment of the present invention, one of two communication terminal apparatuses, having the same configuration, is used as the program transmitting side and the other is used as the program receiving side to update the program, making it possible to manufacture a large amount of apparatuses necessary to update the program easily. Moreover, since the program of the communication terminal apparatus can be updated without having to use a special program updating apparatus, the update of program can be easily performed at any places to set the program updating apparatus. Still moreover, since the program transmitting-side terminal and the program receiving-side terminal are the communication terminal apparatus having the same configuration, the voltage conversion of the transmitting and receiving signals is unnecessary. Accordingly, in connection with the kinds of transmitting and receiving signals, the kind of signal can be freely selected without being limited to the serial signal.

### (Second embodiment)

The difference between the communication terminal apparatus of this embodiment and that of the first embodiment lies in the point that the kind of the connector connected to the program receiving-side terminal is the dedicated connector to be connected to the program receiving-side terminal (hereinafter referred to as "reception dedicated connector").

In the first embodiment, only the kind of connector to be connected to the program transmitting-side terminal was used as the transmission dedicated connector. However, in this embodiment, the kind of connector to be connected to the program receiving-side terminal is also used as the reception dedicated connector. Accordingly, the connecting connector 104 to be connected to the communication terminal apparatus 102 is used as the reception dedicated connector.

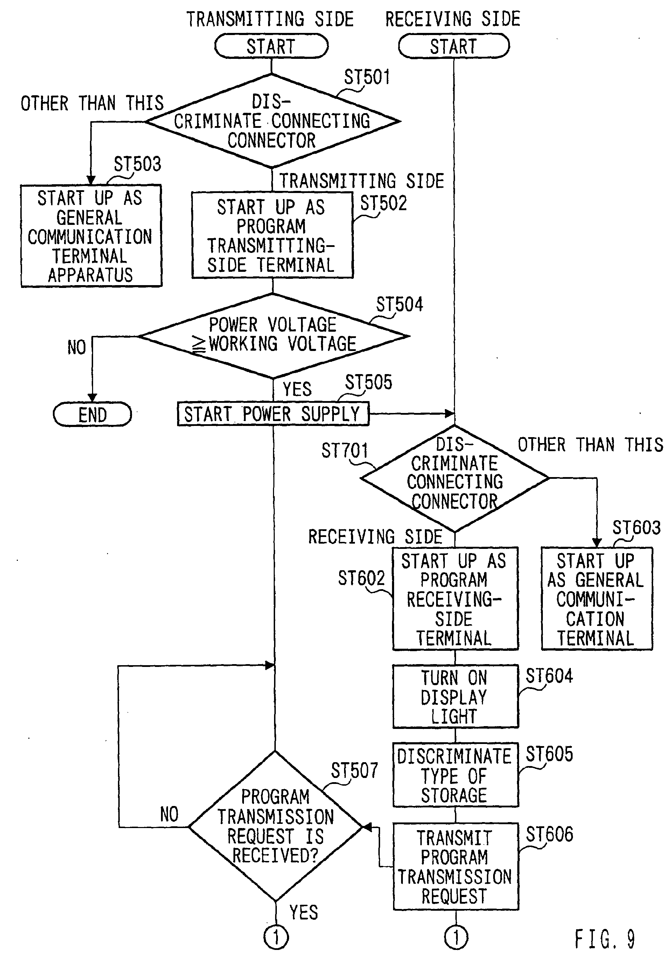

An explanation will be given of the operations of the program receiving-side terminal using FIG. 9. FIG. 9 is a flowchart explaining the operations of the communication terminal apparatuses according to the second embodiment of the present invention. In addition, some steps having the same operations as those of the first embodiment are assigned the same symbols as those of corresponding steps explained in the first embodiment and its explanation is omitted.

In ST701, in the communication terminal apparatus 102, the connecting connector discriminator 201 discriminates the kind of the connecting connector 104. Then, in the case where the kind of the connecting connector 104 is the reception dedicated connector, the connecting connector discriminator 201 starts up the program receiving apparatus 203 in ST602.

While, in the case where the kind of the connecting connector 104 is a connector other than the reception dedicated connector or a connector itself that is not connected, the communication terminal apparatus 102 is started up as a general communication terminal apparatus that performs communications in ST603. This makes it possible for the communication terminal apparatus to be automatically started up as a program receiving-side terminal based on only the discrimination of the kind of the connector.

Thus, according to the second embodiment of the present invention, since the kind of the connector to be connected to the program receiving-side terminal is the reception dedicated connector, the program receiving-side terminal can be started up as a program receiving apparatus without depending on the signal from the program transmitting-side terminal. Accordingly, the program updating procedure becomes simple and time required for program updating processing can be reduced as compared with the first embodiment.

Additionally, the above embodiments have explained that the program transmitting apparatus and the program receiving apparatus separately for the sake of convenience. However, since they are provided in the same communication terminal apparatus, and the common use of the respective components of the same names is possible in the program transmitting apparatus and the program receiving apparatus.

Also, in the above embodiments, the update of program has been performed based on a 1:1 correspondence of the program transmitting-side terminal and the program receiving-side terminal. However, this can be changed to 1:N (N: two or more), so that program update processing can be performed with respect to the plurality of communication terminals concurrently.

Moreover, the above embodiments have explained that two communication terminals, having the same configuration, are connected to each other to carry out the update of program. The method of updating the program can be applied to the other electronic equipment excepting the communication terminal apparatuses.

Still moreover, the above embodiments have been configured such that the program updating state has been displayed using the display lights. However, the present invention is not limited to this, and the present invention may be configured such that display is performed on the screen of such as a liquid crystal display unit and the like. Also, the present invention may be configured such that display is performed by the display light, a computer apparatus, and the like connected to the outer unit of the communication terminal apparatus.

Still moreover, the above embodiments have been configured such that the communication terminal apparatus is worked after connecting the power supply apparatus thereto. However, the present invention may be configured such that program update processing is performed using a battery built in the communication terminal apparatus.

Still moreover, in the aforementioned embodiments, the communication terminal apparatus has been automatically started up as either the program transmitting apparatus or the program receiving apparatus by discriminating the kind of the connector. However, the communication terminal apparatus may be start up as either the program transmitting apparatus or the program receiving apparatus by the manual operation such as a button operation due to the user of the communication terminal apparatus.

As explained above, according to the present invention, it is possible to rapidly improve the efficiency of program update processing and to manufacture a large amount of program updating apparatuses at low cost.

The application is based on the Japanese Patent Application No. HEI 11-299052 filed on October 21, 1999, entire content of which expressly incorporated by reference herein.

### Industrial Applicability

The present invention is applicable to a communication terminal apparatus used in a mobile communication system.

## Claims

1. A program updating method comprising the steps of:
connecting two or more communication terminal apparatuses, having the same configuration, to each other;
transmitting a program in a state that one communication terminal apparatus is used as a program transmitting-side terminal and the other is used as a program receiving-side terminal; and
updating a program stored in said program receiving-side terminal.

2. A communication terminal apparatus comprising:
a transmitter for transmitting an updating program stored in memory to a program receiving-side terminal after reading the updating program from said memory; and
an updater for updating a program stored in memory by a updating program received from a program transmitting-side terminal.

3. The communication terminal according to claim 2, further comprising a discriminator for discriminating the kind of a connector connected to the communication terminal apparatus, wherein said discriminator determines the communication terminal apparatus as either the program transmitting-side terminal or the program receiving-side terminal in accordance with the kind to operate either said transmitter or said updater.

4. The communication terminal apparatus according to claim 2, wherein said transmitter retransmits the updating program to the program receiving-side terminal when program update processing fails.

5. The communication terminal apparatus according to claim 2, wherein said updater updates the program using a writing system according to the type of memory.

6. The communication terminal apparatus according to claim 2, further comprising a voltage measurer for measuring a power voltage to stop the program update processing when the power voltage is smaller than a predetermined voltage.

7. The communication terminal apparatus according to claim 2, further comprising a display for displaying the state of each processing in accordance with each processing stage of the program update processing.

8. The communication terminal apparatus according to claim 2, further comprising a power supplier for supplying power for driving other communication terminal apparatus connected to the communication terminal apparatus to the other communication terminal apparatus.

9. The communication terminal apparatus according to claim 2, further comprising a notifier for notifying other connected communication terminal apparatus connected to the communication terminal apparatus of changeable information necessary for the program update processing.
